# EUROPEAN PATENT APPLICATION

(11) **EP 2 241 469 A1**
(43) Date of publication of application: **20.10.2010**
(21) Application number: 09707562.6
(22) Date of filing: 09.01.2009
(51) Int. Cl.: B60K 17/02, B60K 17/06, B62M 9/08

(54) **VEHICLE POWER UNIT**

(30) Priority: 04.02.2008 JP 2008023623
(71) Applicant: Honda Motor Co., Ltd., Minato-ku Tokyo 107-8556 (JP)
(72) Inventor: TAKIGUCHI, Chikashi, Wako-shi Saitama 351-0193 (JP)
(74) Representative: Beder, Jens
(86) International application number: PCT/JP2009/050197
(87) International publication number: WO 2009/098913

(57) **Abstract**

A power unit 20 for a vehicle has a crankcase 23R, 23L and encasing a crankshaft 37, a V-belt drive continuously variable transmission 35 including a drive pulley shaft 38 coaxial or parallel with the crankshaft 37, a driven pulley shaft 39 parallel with the crankshaft, a transmission case 67 disposed on one side of the crankcase 23R, 23L and encasing the continuously variable transmission 35, a final output shaft 43 disposed on the other side of the crankcase to transmit the output of the engine through a transmission mechanism 22 to the drive wheel 14 of the vehicle, and a wet centrifugal clutch 95 disposed on one side of the crankcase 23R, 23L for operatively connecting and disconnecting the driven pulley shaft 39 and the final output shaft 43. The power unit 20 is mounted on the vehicle with the crankshaft 37 extended transversely of the vehicle. A centrifugal clutch chamber 89 holding the wet centrifugal clutch 95 is formed outside the crankcase 23R, 23L, and a transversely outer end of the centrifugal clutch chamber 89 is covered with the transmission case 67. Oil levels suitable for lubricating the crankshaft 37 and the wet centrifugal clutch 95 can be individually set. The crankcase 23 can be formed in a rigid structure.

## Description

### TECHNICAL FIELD

The present invention relates to a power unit for a vehicle, such as a motorcycle and, more particularly, to improvements in the disposition of a wet centrifugal clutch and in a partition plate separating the wet centrifugal clutch from a crankshaft.

### BACKGROUND ART

A power unit for a vehicle is known which is provided with a V-belt drive continuously variable transmission disposed on one side of a crankcase encasing a crankshaft (for example, refer to Patent Document 1). In this power unit, a wet centrifugal clutch operatively connects the driven pulley of the V-belt drive continuously variable transmission and the final output shaft of the power unit for power transmission. In the power unit, a space for the crankshaft and a space for the wet centrifugal clutch communicate with each other by way of a comparatively large opening. Therefore, lubricating oil levels respectively suitable for the crankshaft and the wet centrifugal clutch cannot be individually determined. Since the crankcase is provided with the large opening therein, it is difficult to form the crankcase in a rigid structure. There is a room to improve the weight balance of the right and left parts of the power unit, to reduce the size, and to improve cleaning facility.

Patent Document 1: WO 2003/085278 (see Fig.2)

### DISCLOSURE OF THE INVENTION

### UNDERLYING PROBLEM TO BE SOLVED BY THE INVENTION

Accordingly, it is an object of the present invention to isolate a crankshaft and a wet centrifugal clutch from each other by a partition wall such that lubricating oil levels respectively suitable for lubricating the crankshaft and the wet centrifugal clutch can be set, to form a rigid crankcase and to provide an improved power unit having satisfactory weight balance of the right and left parts thereof, having a small size and capable of facilitating cleaning operation.

### MEANS TO SOLVE THE UNDERLYING PROBLEM

To attain the above object, the present invention provides a power unit including: a crankcase encasing the crankshaft of an internal combustion engine so as to extend transversely parallel to the width of a vehicle; a V-belt drive continuously variable transmission including a drive pulley shaft rotating together with the crankshaft, a driven pulley shaft extended parallel to the drive shaft, a drive pulley mounted on the drive pulley shaft, a driven pulley mounted on the driven pulley shaft, and a V-belt extended between the drive and the driven pulley; a transmission case disposed on one side of the crankcase and encasing the V-belt drive continuously variable transmission; a final output shaft disposed on the other side of the crankcase to transmit the output of the internal combustion engine through a transmission mechanism to the drive wheel of the vehicle; a wet centrifugal clutch disposed on one side of the crankcase for operatively connecting and disconnecting the driven pulley shaft and the final output shaft of the power unit; and a centrifugal clutch case defining a centrifugal clutch chamber holding the wet centrifugal clutch therein; wherein the centrifugal clutch case encasing the wet centrifugal clutch is disposed outside the crankcase, and a transversely outer end of the centrifugal clutch chamber is covered with the transmission case.

In the power unit according to the present invention, a kick-starting gear chamber is formed under a space between the crankshaft and the wet centrifugal clutch as viewed from a transverse direction so as to be continuous with the interior of the crankcase.

In the power unit according to the present invention, it is preferable that the power unit is mounted on the vehicle such that the center axis of a cylinder bore and the V-belt drive continuously variable transmission are on the opposite sides, respectively, of the center axis of the main frame of a vehicle body.

Typically, the crankcase and the transmission case are castings, and a clutch drum included in the wet centrifugal clutch is in a plane containing the joint of the crankcase and the transmission case.

The V belt may be on the transversely outer side of the joint plate between the transmission case and a transmission cover.

Preferably, the fixed part of the driven pulley is disposed at a transversely outer side of the joint plane between the transmission case and the transmission cover.

### EFFECTS OF THE INVENTION

According to the present invention the centrifugal clutch chamber holding the wet centrifugal clutch is disposed outside the crankcase. Therefore, the crankshaft and the wet centrifugal clutch is isolated from each other, different lubricating oil levels can be easily set, and the partition wall isolating the crankshaft and the wet centrifugal clutch from each other enhances the rigidity of the crankcase.
Since the wet centrifugal clutch is disposed outside the crankcase and the outer end of the wet centrifugal clutch is covered with the transmission case, the wet centrifugal cutch chamber can be formed without using additional parts and hence the formation of the wet centrifugal clutch chamber does not increase the manufacturing cost.

As viewed from a transverse direction, the kick-starting gear chamber is formed under the space between the crankshaft and the wet centrifugal clutch so as to be continuous with the interior of the crankcase. Therefore, the volume of the kick-starting gear chamber can be used as an additional volume for containing the lubricating oil in addition to the volume of the oil pan, and hence an optimum volume of the lubricating oil can be used for setting optimum lubricating oil levels.

Since the power unit is mounted on the vehicle such that the center axis of the cylinder bore and the V-belt drive continuously variable transmission are on the opposite sides, respectively, of the center axis of the main frame of a vehicle body, the respective weights of the transversely opposite parts of the power unit balance well with each other.

Since the crankcase and the transmission case are castings, and the clutch drum of the wet centrifugal clutch is in a joint plane between the crankcase and the transmission case, the power unit has the following effects. The clutch drum is the largest member of the wet centrifugal clutch, and the open ends, in which joint surfaces are formed, of the cast cases have the largest areas, respectively, because the side walls of the cases have a draft to facilitate removing the cast cases from the mold. The transmission case can be formed in a small size by placing the largest member on a plane containing the joint of the joint surfaces of the widest open ends.

Since the V-belt is extended on the transversely outer side of the joint of the transmission case and the transmission cover, the V-belt can be easily changed. Since the transmission cover capable of being easily removed occupies a major part of the transmission chamber, the transmission chamber can be easily cleaned.

Extension of the fixed part of the driven pulley to a transversely outer side of the joint plane between the transmission case and the transmission cover facilitates cleaning the interior of the transmission chamber.

### BRIEF DESCRIPTION OF THE DRAWINGS

Fig. 1 is a side elevation of a motorcycle provided with a power unit in a preferred embodiment of the present invention;
Fig. 2 is a side elevation of the power unit taken from the right-hand side of the motorcycle;
Fig. 3 is a side elevation of the power unit shown taken from the left-hand side of the motorcycle;
Fig. 4 is a development of a sectional view taken on the line IV-IV in Fig. 2 or Fig.3; and
Fig. 5 is a development of a sectional view taken on the line V-V in Fig. 2 or Fig.3.

### DESCRIPTION OF THE REFEREBCE SIGNS

20 ... Power unit, 23 ... Crankcase, 23L ... Left half case of the crankcase, 23R ... Right half case of the crankcase, 35 ... V-belt drive continuously variable transmission, 36 ... Reduction gear mechanism, 37 ... Crankshaft, 38 ... Drive pulley shaft, 39 ... Driven pulley shaft, 41 ... Intermediate shaft, 41a ... Intermediate pinion, 42 ... intermediate gear, 43 ... Final output shaft, 44 ... Output gear, 66 ... Generator cover, 67 ... Transmission case, 68 ... Transmission cover, 70 .. Cylinder bore, 84 ... Crankshaft chamber, 86 ... Reduction gear chamber, 87 ... Generator chamber, 89 ... Centrifugal clutch chamber, 90 ... Transmission chamber, 92 ... Drive pulley, 94 ... Driven pulley, 95 ... Wet centrifugal clutch, 99 ... Kick-starting gear chamber, 121 ... Inner clutch cover, 122 ... Inner boss, 124 ... Clutch weight, 125 ... Clutch drum, 126 ... Clutch output gear.

### BEST MODE FOR CARRYING OUT THE INVENTION

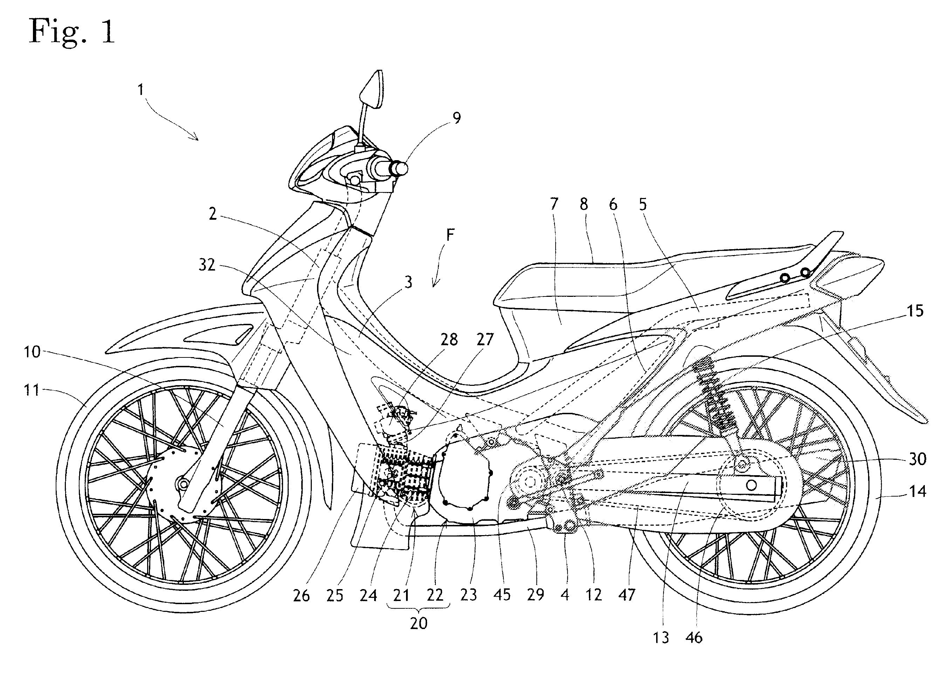

Fig. 1 shows a side elevation of a motorcycle 1 provided with a power unit 20 in a preferred embodiment of the present invention. The motorcycle 1 has a body F which includes a head pipe 2 at the front end of the body F, a main frame 3 extending from the head pipe 2 so as to slope down rearward, right and left pivot brackets 4 fixed to a rear end part of the main frame 3 so as to extend downward. Right and left seat rails 5 are attached to a part of the main frame 3 near the pivot brackets 4 so as to slope up rearward. The seat rails 5 have bent middle parts, respectively. Middle frames 6 are extended between the middle parts of the seat rails 5 and the pivot brackets 4, respectively.

A container 7 and such are placed between the right and the left seat rail 5 of the body F. A seat 8 covers the container 7 and such from above. The seat 8 can be turned to cover and uncover the container 7 and such. A handlebar 9 is supported above a front part of the body F by the head pipe 2 so as to be turnable. A front fork 10 extends down from the head pipe 2, and a front wheel 11 is rotatably supported on a lower end part of the front fork 11. A rear fork 13 extends rearward from the pivot brackets 4. The rear fork 13 has a front end part pivotally supported on the pivot brackets 4 by a pivot shaft 12 and a rear end part rotatably supporting a rear wheel 14. The rear fork 13 can swing up and down in a vertical plane on the pivot shaft 12. Rear shock absorbers 15 are extended between the rear end parts of the rear fork 13 and the seat rails 5, respectively. The power unit 20 is disposed at a position under the main frame 3 and in front of the pivot brackets 4 and is suspended from the main frame 3.

The power unit 20 includes an internal combustion engine 21 forming a front part of the power unit 20, and a power transmission 22 forming a rear part of the power unit 20. The internal combustion engine 21 is a single-cylinder four-stroke internal combustion engine. A cylinder block 24, a cylinder head 25 and a cylinder head cover 26 are stacked in that order on the front surface of a crankcase 23. The assembly of the cylinder block 24, the cylinder head 25 and the cylinder head cover 26 is tilted forward at a large angle so as to protrude forward in a substantially horizontal position. A suction pipe 27 is extended upward from the cylinder head 25 and a throttle body 28 is connected to the suction pipe 27. An exhaust pipe 29 extends downward from the cylinder head 25 and is bent so as to extend rearward. A muffler 30 disposed on the right-hand side of the rear wheel 14 is connected to the rear end of the exhaust pipe 29.

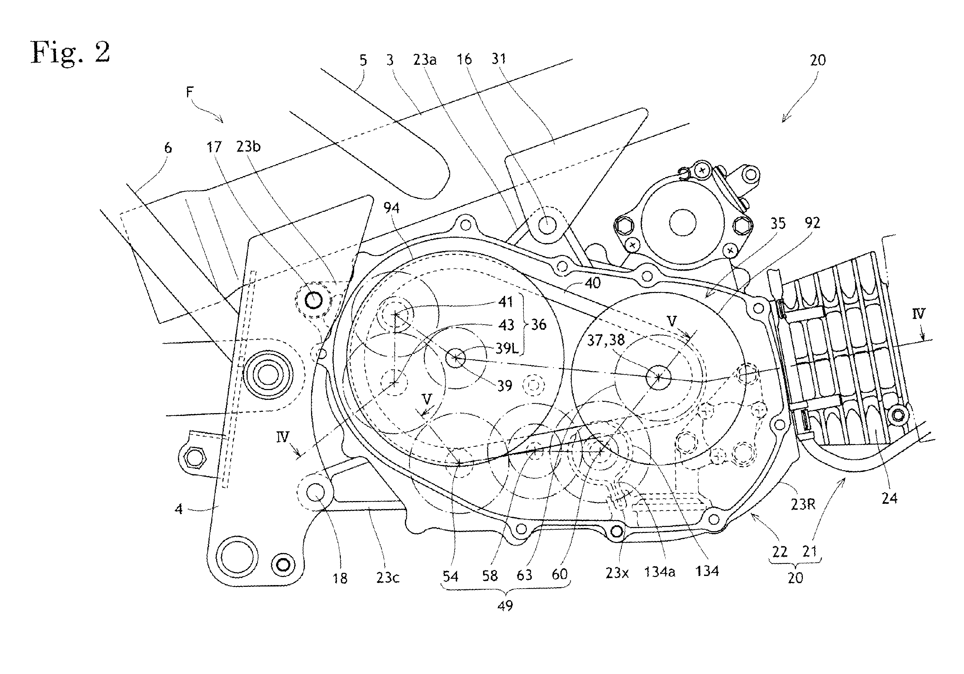

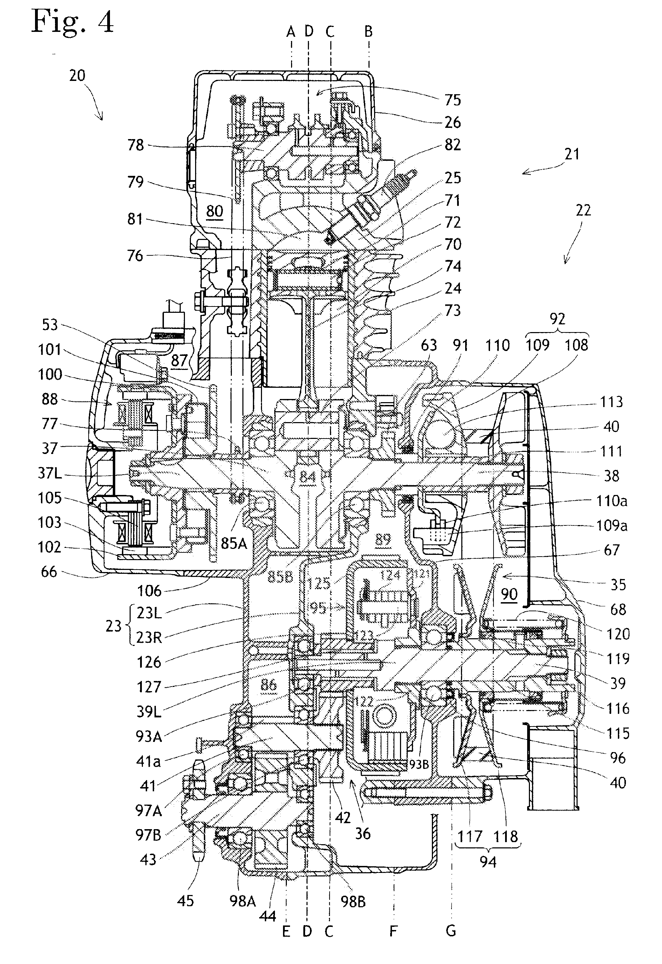

Fig. 2 is a side elevation of the power unit 20 taken from the right-hand side of the motorcycle. The outer shell of the power transmission 22 will be described later with reference to Fig. 4. The crankcase 23 is formed by joining a right half case 23R and a left half case 23L. Referring to Fig. 2 showing the right half case 23R, a bracket 31 protrudes downward from a middle part of the main frame 3 of the motorcycle. Mounting brackets 23a protruding from the upper surfaces of the right half case 23R and the left half case 23L, respectively, are connected to the bracket 31 by means of a shaft 16. Mounting brackets 23b protruding from upper parts of the rear surfaces of the right half case 23R and the left half case 23L are connected to upper parts of the pivot brackets 4, respectively, by a shaft 17. Mounting brackets 23c protruding from lower parts of the rear surfaces of the right half case 23R and the left half case 23L are connected to lower parts of the pivot brackets 4, respectively, by a shaft 18. Thus, the power unit 20 is fixedly disposed under the main frame 3 and in front of the pivot brackets 4. The body F is covered with a synthetic resin cover 32 (Fig. 1) formed by assembling component parts.

Referring to Fig. 2, the power transmission 22 includes a V-belt drive continuously variable transmission 35 and a reduction gear mechanism 36. Shafts of the power transmission 22 are shown in Fig. 2. A crankshaft 37 included in the internal combustion engine 21 is disposed in a front part of the crankcase 23. A right part of the crankshaft 37 serves as a drive pulley shaft 38 included in the V-belt drive continuously variable transmission 35. A driven pulley shaft 39 included in the V-belt drive continuously variable transmission 35 is disposed in a rear part of the crankcase 23. A drive pulley 92 and a driven pulley 94 are mounted on the drive pulley shaft 38 and the driven pulley shaft 39, respectively. A V-belt 40 is extended between the drive pulley 92 and the driven pulley 94 to form the V-belt drive continuously variable transmission 35.

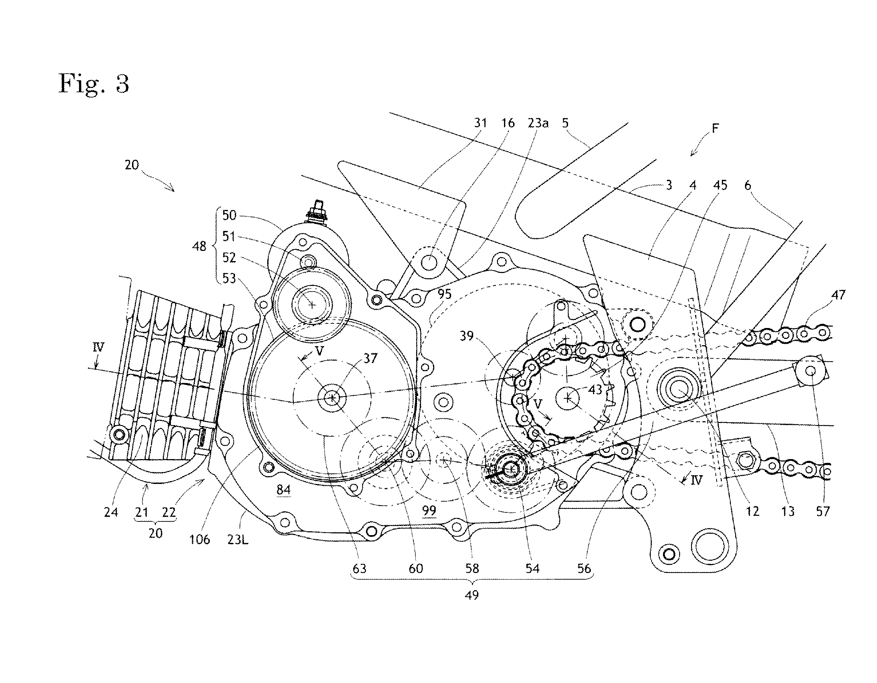

Referring to Figs. 3 and 4, a wet centrifugal clutch 95 is mounted on a left part 39L of the driven pulley shaft 39. The wet centrifugal clutch 95 has a diameter substantially equal to that of the driven pulley 94. The left part 39L of the driven pulley shaft 39 serves as an input shaft for the reduction gear mechanism 36. The reduction gear mechanism 36 has the left part 39L of the driven pulley shaft 39 as an input shaft, an intermediate shaft 41 and an output shaft 43. The output shaft 43 of the reduction gear mechanism 36 is also the final output shaft of the power unit 20. Gears are mounted on those shafts 39L, 41 and 43 to form the reduction gear mechanism 36. The final output shaft 43 projects to the left from a rear part of the left half case 23L of the crankcase 23. The rotational driving force of the power unit 20 is transferred through the final output shaft 43 to a driven mechanism. A drive sprocket 45 is mounted on the final output shaft 43, a driven sprocket 46 (Fig. 1) is combined with the rear wheel 14, and a drive chain 47 is extended between the drive sprocket 45 and the driven sprocket 46 to transmit the output rotational driving force of the power unit 20 to the rear wheel 14.

Fig. 3 shows a side elevation of the power unit 20 taken from the left side of the motorcycle 1. Shown in Fig. 3 is a left half case 23L provided with an opening and a closed wall 106 surrounding the opening. The power unit 20 includes an electric starting mechanism 48 and a kick-starting mechanism 49. The electric starting mechanism 48 includes a drive pinion 51 mounted on the output shaft of a starting motor 50, an intermediate shaft 52, gears mounted on the intermediate shaft 52, and a driven gear 53 mounted on a left part of the crankshaft 37. The electric starting mechanism 48 is a reduction gear mechanism.

The kick-starting mechanism 49 includes a kick drive shaft 54, a kick arm 56 having one end connected to the drive shaft 54, a kick pedal 57 attached to the other end of the kick arm 56, a first intermediate shaft 58, a second intermediate shaft 60, gears mounted on those shafts, and a driven gear 63 mounted on a right part of the crankshaft 37. The kick-starting mechanism 49 is a speed-increasing gear mechanism.

Fig. 4 is a development of a sectional view of the power unit 20 taken on the line IV-IV in Fig. 2 or 3. A cylinder block 24, a cylinder head 25 and a cylinder head cover 26 are stacked in that order on the front end of the crankcase 23 to form the outer shell of the internal combustion engine 21. A piston 71 is fitted for reciprocation in a cylinder bore 70 formed in the cylinder block 24. The piston 71 is connected to the crankshaft 37 by a piston pin 72, a crank pin 73 and a connecting rod 74.

The internal combustion engine 21 is provided with a SOHC type valve system. A valve operating mechanism 75 is provided in the cylinder head cover 26. A camshaft drive chain 76 for transmitting power to the valve operating mechanism 75 is extended between a camshaft drive sprocket 77 mounted on a left part 37L of the crankshaft 37, and driven sprocket 79 mounted on a left part of a camshaft 78. A camshaft drive chain chamber 80 for the camshaft drive chain 76 extends through the left half case 23L, the cylinder block 24 and the cylinder head 25. A combustion chamber 81 is formed in the end surface of the cylinder head 25, joined to the cylinder block 24. A spark plug 82 is inserted from the right-hand side of the cylinder head 25 into a spark plug hole formed in the cylinder head 25 such that the inner end of the spark plug 82 is exposed in the combustion chamber 81.

The power transmission 22 of the power unit 20 has a body including the crankcase 23 formed by joining together the right half case 23R and the left half case 23L, a generator cover 66 attached to a left part of the left half case 23L, a transmission case 67 attached to a right part of the right half case 23R, and a transmission cover 68 covering the open right end of the transmission case 67.

The crankcase 23 defines a crankshaft chamber 84 and a reduction gear chamber 86. The crankshaft 37 is supported for rotation in bearings 85A and 85B on the right half case 23L and the left half case 23R. The crankshaft 37 is extended in a transverse direction parallel to the width of the motorcycle. Part of the reduction gear mechanism 36 is in the reduction gear chamber 86.

A generator chamber 87 is defined by the left half case 23L and the generator cover 66. The camshaft drive sprocket 77, the driven gear 53 of the electric starting mechanism 48 and an alternator 88 are mounted on the left part 37L of the crankshaft 37 extending in the generator chamber 87.

The driven gear 53 is rotatably mounted on the left part 37L of the crankshaft 37 on the left side of the camshaft drive sprocket 77. An outer disk 100 of the alternator 88 is mounted on the left part 37L of the crankshaft 37 on the left side of the driven gear 53. The driven gear 53 and the outer disk 100 are interlocked by a one-way clutch 101. The alternator 88 has a cup-shaped outer rotor 102 fixed to the outer disk 100. Magnets 103 are attached to the inner circumference of the outer rotor 102 in a circumferential arrangement. A stator 105 provided with a stator coil is inserted in a space surrounded by the magnets 103 and is fixed to the inside surface of the generator cover 66. The generator cover 66 is attached to the closed wall 106 (Fig. 3) surrounding the opening of the left half case 23L so as to cover the outer rotor 102.

The right half case 23R and the transmission case 67 define a centrifugal clutch chamber 89 therebetween. The transmission case 67 and the transmission cover 68 define a transmission chamber 90 therebetween. The drive pulley shaft 38, namely, a right part of the crankshaft 37, extends to the right beyond the bearing 85B of the right half case 23R of the crankcase into a centrifugal clutch chamber 89 and further extends through a sealing member 91 supported on the transmission case 67 into a transmission chamber 90. The crankshaft 37 has a splined part extending in the centrifugal clutch chamber 89. The driven gear 63 of the kick-starting mechanism 49 is mounted on the splined part of the crankshaft 37. The right part of the crankshaft 37 extending in the transmission chamber 90 is the drive pulley shaft 38 of the V-belt drive continuously variable transmission 35. The drive pulley 92 of the continuously variable transmission 35 is combined with the drive pulley shaft 38.

The driven pulley shaft 39 of the V-belt drive continuously variable transmission 35 is supported in bearings 93A and 93B on the right half case 23R and the transmission case 67. The driven pulley 94 of the continuously variable transmission 35 is mounted on a part of the driven pulley shaft 39 within the transmission chamber 90. The wet centrifugal clutch 95 and a clutch output gear 126 are mounted on a part of the driven pulley shaft 39 extending in the centrifugal clutch chamber 89. A sealing member 96 is fitted in a bearing opening formed in the transmission case 67 to hold the bearing 93B supporting the driven pulley shaft 39.

The transmission chamber 90 for the V-belt drive continuously variable transmission 35 is separated from the centrifugal clutch chamber 89 by the transmission case 67. Gaps in the openings by means of which the transmission chamber 90 and the centrifugal clutch chamber 89 communicate with each other are sealed by the sealing members 91 and 96 to prevent the lubricating oil contained in the centrifugal clutch chamber 89 from leaking into the transmission chamber 90.

The drive pulley 92 of the V-belt drive continuously variable transmission 35 has a fixed half drive part 108 and a movable half drive part 109. The fixed half drive part 108 is fixedly mounted on the drive pulley shaft 38. The movable half drive part 109 on the left side of the fixed half drive part 108 is axially slidably supported on a sleeve 111 for fixedly connecting a cam plate 110 to the drive pulley shaft 38. A sliding member 110a placed on the circumference of the cam plate 110 is axially slidably engaged with a sliding member 109a axially extending from the circumference of the movable half drive part 109. The cam plate 110 rotates together with the movable half part 109. Thus, the movable half drive part 109 can rotate together with the drive pulley shaft 38 and can slide axially toward and away from the fixed half drive part 108. The V-belt 40 is engaged in the space between the fixed half drive part 108 and the movable half drive part 109.

A back surface of the movable half drive part 109 facing the cam plate 110 is tapered such that radially outer parts of the back surface is closer to the camplate 110. Weight rollers 113 are interposed between the tapered back surface of the movable half drive part 109 and the cam plate 110. As the rotational speed of the drive pulley shaft 38 increases, the weight rollers 113 are moved radially outward by centrifugal force to move the movable half drive part 109 to the right so as to approach the fixed half drive part 108. Consequently, the V-belt 40 engaged in the space between the fixed half drive part 108 and the movable half drive part 109 is forced to shift radially outward and the pitch diameter of the drive pulley 92 is increased.

A sleeve 115 is put on a part, extending in the transmission chamber 90, of the driven pulley shaft 39 of the continuously variable transmission 35 from the right-hand side. A nut 116 is screwed on the driven pulley shaft 39 so as to press the sleeve 115 against the inner race of the bearing 93B to hold the sleeve 115 securely on the driven pulley shaft 39. A fixed half driven part 117 of the driven pulley 94 is mounted on the sleeve 115. A movable half driven part 118 of the driven pulley 94 is supported axially slidably on the sleeve 115 on the right side of the fixed half driven part 117. The movable half driven part 118 is pushed to the left by springs 120. The V-belt 40 is engaged in the space between the fixed half driven part 117 and the movable half driven part 118 of the driven pulley 94.

The V-belt drive continuously variable transmission 35 transmits the power of the drive pulley shaft 38, namely, the crankshaft 37, by the V-belt 40 to the driven pulley shaft 39. As the rotational speed of the drive pulley shaft 38 increases, the weight rollers 113 move radially outward to force the movable half drive part 109 of the drive pulley 92 to move toward the fixed half drive part 108. Consequently, the V-belt 40 is moved radially outward and the pitch diameter of the drive pulley 92 increases and, at the same time, the V-belt 40 engaged in the space between the fixed half driven part 117 and the movable half driven part 118 moves radially inward to reduce the pitch diameter of the driven pulley 94. Thus, the rotational speed of the driven pulley shaft 39 is changed automatically continuously.

The wet centrifugal clutch 95 is mounted on a left part 39L of the driven pulley shaft 39 in the centrifugal clutch chamber 89. The wet centrifugal clutch 95 has a hub 122 provided with a boss having an internally splined center bore. The hub 122 is mounted on an externally splined part of the driven pulley shaft 30. A clutch inner plate 121 included in the wet centrifugal clutch 95 is fixedly held on the hub 122. A plurality of pins 123 are fixedly provided in a peripheral part of the hub 122 in a circumferential arrangement so as to extend axially. Clutch weights 124 are supported on the pins 123 so as to be turnable. A clutch outer member or drum 125 has a cylindrical wall facing the clutch weights 124 and surrounding the clutch inner plate 121.

A clutch output gear 126 having a boss is supported by a needle bearing 127 on a left end part of the driven pulley shaft 39. The boss of the clutch output gear 126 is welded to the clutch drum 125. The clutch weights 124 turn and come into engagement with the clutch drum 125 and the wet centrifugal clutch 95 is engaged when the rotational speed of the driven pulley shaft 39 exceeds a predetermined rotational speed. Consequently, the clutch drum 125 and the clutch output gear 126 start rotating.

The reduction gear mechanism 36 is placed between the driven pulley shaft 39 of the V-belt drive continuously variable transmission 35 and the final output shaft 43 disposed behind the driven pulley shaft 39. An intermediate shaft 41 of the reduction gear mechanism 36 is supported in bearings 97A and 97B on the left half case 23L and the right half case 23R. An intermediate gear 42 is mounted on a part in the centrifugal clutch chamber 89 of the intermediate shaft 41. An intermediate pinion 41a is mounted on a part in the reduction gear chamber 86 of the intermediate shaft 41. The intermediate gear 42 is engaged with the clutch output gear 126.

The final output shaft 43 is supported in bearings 98A and 98B on the left half case 23L and the right half case 23R. An output gear 44 is mounted on a part in the reduction gear chamber 86 of the final output shaft 43. A drive sprocket 45 is mounted on a left end part projecting to the left from the left half case 23L of the final output shaft 43. The gear 44 mounted on the final output shaft 43 is engaged with the intermediate pinion 41a on the intermediate shaft 41 of the reduction gear mechanism 36.

The rotation of the clutch output gear 126 is transmitted through the gear 42 engaged with the clutch output gear 126 to the intermediate shaft 41 of the reduction gear mechanism 36. The rotation of the intermediate shaft 41 is transmitted through the pinion 41a and the gear 44 to the final output shaft 43 at a reduced rotational speed. Thus the rotation of the clutch output gear 126 is transmitted at a reduced rotational speed to the drive sprocket 45 mounted on the left end part projecting to the left from the left half case 23L of the final output shaft 43. The rotation of a reduced rotational speed of the drive sprocket 45 is transmitted by the drive chain 47 to the rear wheel 14 to drive the motorcycle 1 for running.

Referring to Fig. 4, a line A indicates the outline of left side of the main frame 3, a line B indicates the outline of the right side of the main frame 3, the line C-C is the center axis of the main frame 3 corresponding to a center line of a space between the lines A and B. A line D-D is the center axis of the cylinder bore 70. A line E indicates the joint of the right half case 23R and the left half case 23L. A line F indicates the joint of the right half case 23R and the transmission case 67. A line G indicates the joint of the transmission case 67 and the transmission cover 68.

The center line D-D of the cylinder bore 70 and the V-belt drive continuously variable transmission 35 are on the opposite sides, respectively, of the center axis C-C of the main frame 3. The respective weights of the right and the left part of the power unit 20 on the opposite sides, respectively, of the center axis C-c of the main frame 3 are balanced well with each other.

The crankcase 23 and the transmission case 67 are castings. The clutch drum 125 of the wet centrifugal clutch 95 is on a plane containing the joint F of the right half case 23R of the crankcase 23 and the transmission case 67. The clutch drum 125 is the largest member of the wet centrifugal clutch 95. The open ends, in which joint surfaces are formed, of the cast cases 23 and 67 have the largest areas, respectively, because the side walls of the cast cases 23 and 67 have a draft to facilitate removing the cast cases 23 and 67 from the molds. The transmission case 67 can be formed in a small size by placing the largest member on the plane containing the joint F of the widest open ends.

The V-belt 40 is located on the outer side of the joint G of the transmission case 67 and the transmission cover 68 with respect to the width of the body of the motorcycle, which facilitates changing the V-belt 40 after removing the transmission cover 68. Since most part of the transmission chamber 90 is defined by the easily removable transmission cover 68, the transmission chamber 90 can be easily cleaned. Placement of the fixed half part 117 of the driven pulley 94 on the outer side of the joint G of the transmission case 67 and the transmission cover 68 with respect to the width of the body of the motorcycle facilitates cleaning the transmission chamber 90 still further.

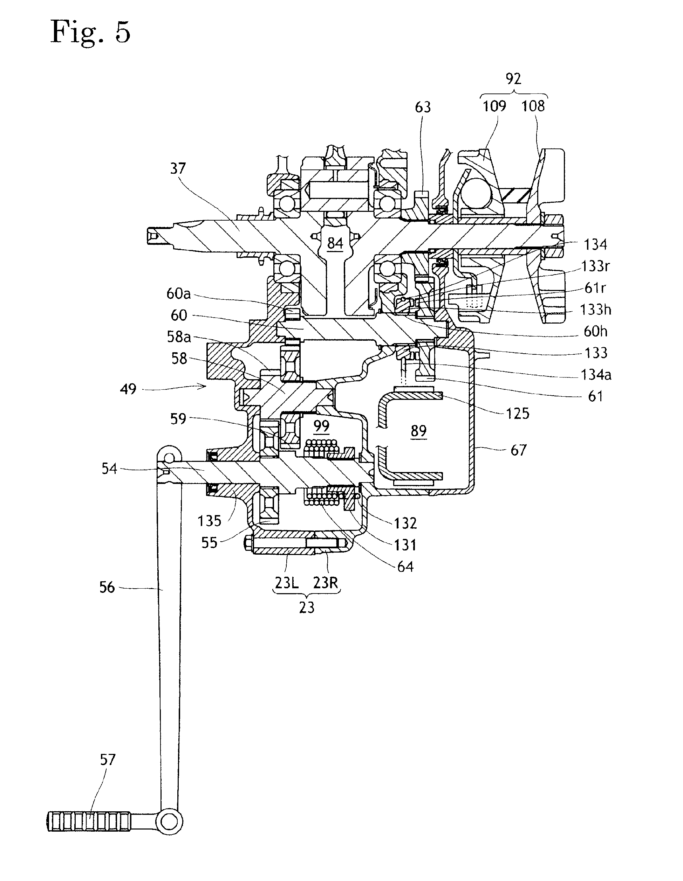

Fig. 5 shows a development of a sectional view of the kick-starting mechanism 49 in a lower part of the crankcase 23 taken on the line V-V in Fig. 2 or 3. As shown in Fig. 3, the kick drive shaft 54 is disposed below the driven pulley shaft 39 of the continuously variable transmission 35 as viewed from a transverse direction. A kick-starting gear chamber 99 extends under a space between the crankshaft 37 and the wet centrifugal clutch 95. The kick-starting gear chamber 99 is continuous with the crankshaft chamber 84. Thus, the volume of the kick-starting gear chamber 99 can be used for containing the lubricating oil in addition to the volume of a lower part (oil pan) of the crankshaft chamber 84. Thus, power unit 20 can contain an optimum quantity of the lubricating oil at an optimum oil level.

Referring to Fig. 5, the kick drive shaft 54 is supported rotatably on the right half case 23R and the left half case 23L in the kick-starting gear chamber 99. The kick-starting gear chamber 99 is continuous with the crankshaft chamber 84. A base end part of the kick arm 56 is mounted on the kick drive shaft 54. The kick pedal 57 is connected to a free end part of the kick arm 56 so as to be tiltable. A bearing part 135 of the left half case 23L has the shape of a cylinder having a thick wall. The bearing part 135 protrudes to the left. A left end part of the drive shaft 54 extends through and projects to the left from the bearing part 135. A right end part of the drive shaft 54 is supported in a bearing part formed in a bulged part of the right half case 23R. A return spring 64 is wound round the drive shaft 54 in the bulged part of the right half case 23R. The return spring 64 applies a resilient force to the drive shaft 54 to hold the kick drive shaft 54 and the kick arm 56 at their home positions. A stopper 131 formed with a projection is mounted on and interlocked by splines with the right end part of the drive shaft 54. The projection of the stopper 131 comes into contact with a projection 132 formed on the right half case 23R to hold the kick arm 56 at the predetermined home position.

A drive gear 55 is mounted on the kick drive shaft 54 contiguously with the bearing part 135. The kick drive shaft 54 and the drive gear 55 are interlocked by serrations. A short, first intermediate shaft 58 is disposed in front of the kick drive shaft 54 and is rotatably supported on the right half case 23R and the left half case 23L. A long, second intermediate shaft 60 is disposed in front of the first intermediate shaft 58 and is rotatably supported on a part of the right half case 23R, a part of the left half case 23L a long distance apart from the part of the right half case 23R, and the transmission case 67. The second intermediate shaft 60 penetrates the right half case 23R so as to extend in both the crankshaft chamber 84 and the centrifugal clutch chamber 89. A pinion 58a is formed integrally with the first intermediate shaft 58 and a gear 59 is mounted on and interlocked by serrations with the first intermediate shaft 58. The pinion 58a is engaged with the drive gear 55. A pinion 60a is formed in a part of the second intermediate shaft 60 near the end part thereof supported on the left half case 23L. The pinion 60a is engaged with the gear 59.

A driven helical gear 133 is mounted on the second intermediate shaft 60 in the centrifugal clutch chamber 89. External helical gear teeth 60h are formed in the circumference of the second intermediate shaft 60. Internal helical gear teeth 133h are formed in the inner circumference of the driven helical gear 133. The external helical gear teeth 60h and the internal helical gear teeth 133h are engaged.

A friction spring 134 (Fig. 2) of the shape of an open ring having an open part is firmly engaged in a circumferential groove formed in the circumference of the driven helical gear 133 to exert a frictional resistance against the rotation of the driven helical gear 133. A protrusion 134a protruding from the friction spring 134 is slidably engaged in a transverse groove 23x (Fig. 2) formed in a ridge of the right half case 23R.

A large gear 61 is rotatably supported on the second intermediate shaft 60 on the right side of the drive helical gear 133. The gear 61 is engaged with a kick-starting driven gear 63 mounted on and interlocked by splines with the crankshaft 37. Ratchet teeth 133r are formed in a peripheral part of the right side surface of the driven helical gear 133 and ratchet teeth 61r are formed in the left side surface of the gear 61. The ratchet teeth 61r are engageable with the ratchet teeth 133r to form a ratchet mechanism.

When the kick pedal 57 of the kick-starting mechanism 49 is kicked down to rotate the drive shaft 54 against the resilience of the return spring 64, the drive gear 55 mounted on the kick drive shaft 54 engaged with the pinion 58a drives the first intermediate shaft 58 for rotation at an increased rotational speed. Then, the gear 59 mounted on the first intermediate shaft 58 and engaged with the pinion 60a on the second intermediate shaft 60 drives the second intermediate shaft 60 for rotation at an increased rotational speed.

When the second intermediate shaft 60 is rotated, the driven helical gear 133 provided with the internal helical gear teeth 133h engaged with the external helical gear teeth 60h formed in the second intermediate shaft 60 moves to the right as the driven helical gear 133 is restrained from rotation by frictional resistance exerted thereon by the friction spring 134. The ratchet teeth 133r engage with the ratchet teeth 61r of the gear 61. Consequently, the driven helical gear 133 and the gear 61 rotate together with the second intermediate shaft 60. Since the gear 61 is engaged with the driven gear 63 mounted on the crankshaft 37, the crankshaft 37 is rotated forcibly to start the internal combustion engine 21.

When the kick pedal 57 is released after being kicked down, the return spring 64 turns the kick drive shaft 54 and the kick arm 56 to their home positions. Consequently, the first intermediate shaft 58 and the second intermediate shaft 60 are turned in the opposite direction, the driven helical gear 133 is moved to the left by the agency of the engaged helical gear teeth 60b and 133h, and the ratchet teeth 61r and 133r are disengaged.

The preferred embodiment described herein has the following effects.
(1) Since the centrifugal clutch chamber 89 containing the wet centrifugal clutch 95 is formed outside the crankcase 23, and the centrifugal clutch chamber 89 is isolated from the crankshaft chamber 84 by the right half case 23R, the crankshaft chamber 84 and the centrifugal clutch chamber 89 can contain lubricating oil at suitable oil levels, respectively. Since the centrifugal clutch chamber 89 and the crankshaft chamber 84 are isolated from each other, the crankcase 23 can be formed in a rigid structure. Since the wet centrifugal clutch 95 is disposed outside the crankcase 23 and is covered with the transmission case 67, the centrifugal clutch chamber 89 can be formed without using additional parts and hence the manufacturing cost is not increased.
(2) Since the kick-starting gear chamber 99 is continuous with the crankshaft chamber 84, the volume of the kick-starting gear chamber 99 can be used for containing the lubricating oil in addition to the volume of a lower part (oil pan) of the crankshaft chamber 84. Thus, the power unit 20 can contain an optimum quantity of the lubricating oil at an optimum oil level.
(3) Since the center line of the cylinder bore 70 and the V-belt drive continuously variable transmission 35 are on the opposite sides, respectively, of the center axis of the main frame 3, the respective weights of the right and the left part of the power unit 20 on the opposite sides, respectively, of the center axis of the main frame 3 are balanced well with each other.
(4) The clutch drum 125 of the wet centrifugal clutch 95 is on a plane containing the joint F of the right half case 23R of the crankcase 23 and the transmission case 67. The open ends, in which joint surfaces are formed, of the cast cases 23 and 67 have the largest areas, respectively, because the side walls of the cast cases 23 and 67 have a draft to facilitate removing the cast cases 23 and 67 from the molds. The transmission case 67 can be formed in a small size by placing the largest member on the plane containing the joint F of the widest open ends.
(5) Since the V-belt 40 extends on the outer side of the joint G of the transmission case 67 and the transmission cover 68, work for changing the V-belt 40 is facilitated. Since most part of the transmission chamber 90 is defined by the easily removable transmission cover 68, the transmission chamber 90 can be easily cleaned.
(6) Since the fixed half part 117 of the driven pulley 94 is placed on the outer side of the joint G of the transmission case 67 and the transmission cover 68, work for cleaning the transmission chamber 90 is facilitated still further.

## Claims

1. A power unit for a vehicle, comprising:
a crankcase encasing a crankshaft of an internal combustion engine so as to extend transversely parallel to the width of a vehicle;
a V-belt drive continuously variable transmission including a drive pulley shaft rotatable together with the crankshaft, a driven pulley shaft extended parallel to the drive pulley shaft, a drive pulley mounted on the drive pulley shaft, a driven pulley mounted on the driven pulley shaft, and a V-belt extended between the drive and the driven pulley;
a transmission case disposed on one side of the crankcase and encasing the V-belt drive continuously variable transmission;
a final output shaft disposed on the other side of the crankcase to transmit output of the internal combustion engine through a transmission mechanism to a drive wheel of the vehicle;
a wet centrifugal clutch disposed on one side of the crankcase for operatively connecting and disconnecting the driven pulley shaft and the final output shaft of the power unit; and
a centrifugal clutch case defining a centrifugal clutch chamber for holding the wet centrifugal clutch therein;
wherein the centrifugal clutch case encasing the wet centrifugal clutch is disposed outside the crankcase, and a transversely outer end of the centrifugal clutch chamber is covered with the transmission case.

2. The power unit for a vehicle according to claim 1, wherein a kick-starting gear chamber is formed under a space between the crankshaft and the wet centrifugal clutch as viewed from a transverse direction so as to be continuous with the interior of the crankcase.

3. The power unit for a vehicle according to claim 2, wherein the power unit is mounted on the vehicle such that a center axis of a cylinder bore and the V-belt drive continuously variable transmission are on the opposite sides, respectively, of a center axis of a main frame of a vehicle body.

4. The power unit for a vehicle according to any one of claims 1 to 3, wherein the crankcase and the transmission case are castings, and a clutch drum included in the wet centrifugal clutch is in a plane containing a joint of the crankcase and the transmission case.

5. The power unit according to any one of claims 1 to 4, wherein the V-belt is on the transversely outer side of a joint of the transmission case and a transmission cover.

6. The power unit according to claim 5, wherein a fixed part of the driven pulley is disposed at a transversely outer side of the joint of the transmission case and the transmission cover.
